Europäisches Patentamt

European Patent Office

Office européen des brevets

(19)

(11) Publication number : **0 436 516 A2**

(12) **EUROPEAN PATENT APPLICATION**

(21) Application number : **91300080.8**

(22) Date of filing : **04.01.91**

(51) Int. Cl.⁵ : **G02C 7/02**

(30) Priority : **04.01.90 GB 9000165**

(43) Date of publication of application :
**10.07.91 Bulletin 91/28**

(84) Designated Contracting States :
**DE FR GB IT**

(71) Applicant : **CAMBRIDGE OPTICAL GROUP
LIMITED**
**Bridge House, P.O. Box 76, Saxon Way
Bar Hill, Cambridge CM3 8SH (GB)**
Applicant : **MEDICAL RESEARCH COUNCIL
M.R.C. Applied Psycology Unit, 15 Chaucer
Road
Cambridge CB2 2EF (GB)**

(72) Inventor : **Wilkinson, Peter Roland**
**31 Batchelors Way
Amersham, Buckinghamshire, HP7 9AJ (GB)**
Inventor : **Wilkins, Arnold Jonathan**
**109 High Street
Bottisham, Cambridge, CB5 9BA (GB)**

(74) Representative : **Warren, Keith Stanley et al
BARON & WARREN 18 South End Kensington
London W8 5BU (GB)**

(54) **Optical devices for reducing photophobia.**

(57) An optical device is provided which functions to reduce the intensity of non-steady light impinging on the eye and emitted by electrical and electronic devices. The device, which conveniently comprises spectacle lenses, reduces the transmission level to the eye of light having wavelengths shorter than 500 nm to approximately 10% whilst retaining the transmission level for light wavelengths longer than 700 nm at approximately 90%. There is a gradual transition in the transmission level between 500 nm and 700 nm, and a transmission level reduced below the high transmission level in the range 610-650 nm. For wavelengths shorter than 400 nm, the transmission level is substantially zero.

Fig.4

EP 0 436 516 A2

## OPTICAL DEVICES FOR REDUCING PHOTOPHOBIA

The present invention relates to optical devices for reducing photophobia, such devices typically being lenses for spectacles, visors and goggles, and screens for visual display units (VDUs).

The use of light absorbing tinted spectacle lenses, visors or goggles is well known as an aid to vision. The commonest types are the dark lenses used in sunglasses, which merely restrict the amount of light reaching the eyes. There are other types where the aim is to restrict the passage of certain types of light, such as an ultra violet light absorber. Tinted lenses may also be used purely for fashion purposes.

In addition to the more general application of light absorbing lenses, there are many specific uses to alleviate the problems of particular eye defects. Examples of these are the special glass tints, e.g. Crooks Alpha, and more recently the Irlin lenses (for the alleviation of dyslexia). There are also special lenses for scientific use, e.g. laser protection.

With the exception of particular scientific applications, such as laser protection, and certain general uses, such as ultra violet protection, the choice of type of tint has largely been a matter of trial and error. The Irlin (dyslexia) lenses comprise a large range of lenses which are tested by the wearer to choose the most effective.

The use of special coatings to reduce annoying reflections is also well known.

The development of modern technology has placed new stresses on the human visual system. Two particular examples are the use of fluorescent lights and VDUs (on computers and televisions). The major difference between light emitted from electronic devices and natural sunlight is that the former can pulsate at high frequency instead of remaining at a constant intensity. The pulsation is usually too rapid to be seen as flicker but, nevertheless, can affect the brain, causing headaches and eye-strain.

In order that the present invention may be more readily understood, reference will hereafter be made to the accompanying drawings, in which :—

Figure 1 is a spectral energy distribution graph of a typical halophosphate lamp showing the variation in light output in micro watts per nm per lumen during one half cycle of a.c. mains supply,

Figure 2 is a graph showing the percentage fluctuation in the light output of a halophosphate lamp and has been plotted from the average of experimental measurements taken from five types of such lamps,

Figure 3 is a spectral energy distribution graph for a typical triphosphor lamp showing the variations in light output in micro watts per nm per lumen during one half cycle of a.c. mains supply, and

Figure 4 is the light transmission characteristic of a preferred embodiment of the invention.

The commonest source of flickering light is fluorescent lighting. The most common types of fluorescent light sources are halophosphate and triphosphor lamps. Other types exist but are used mainly for specialist purposes. The fluctuation of light differs from one type of fluorescent lamp to another because of differences in the persistence of after glow of the phosphors. The fluctuation of light is spectrally complex owing to the varying contribution of light from the different phosphors and the phase-lag produced by phosphors with long persistence.

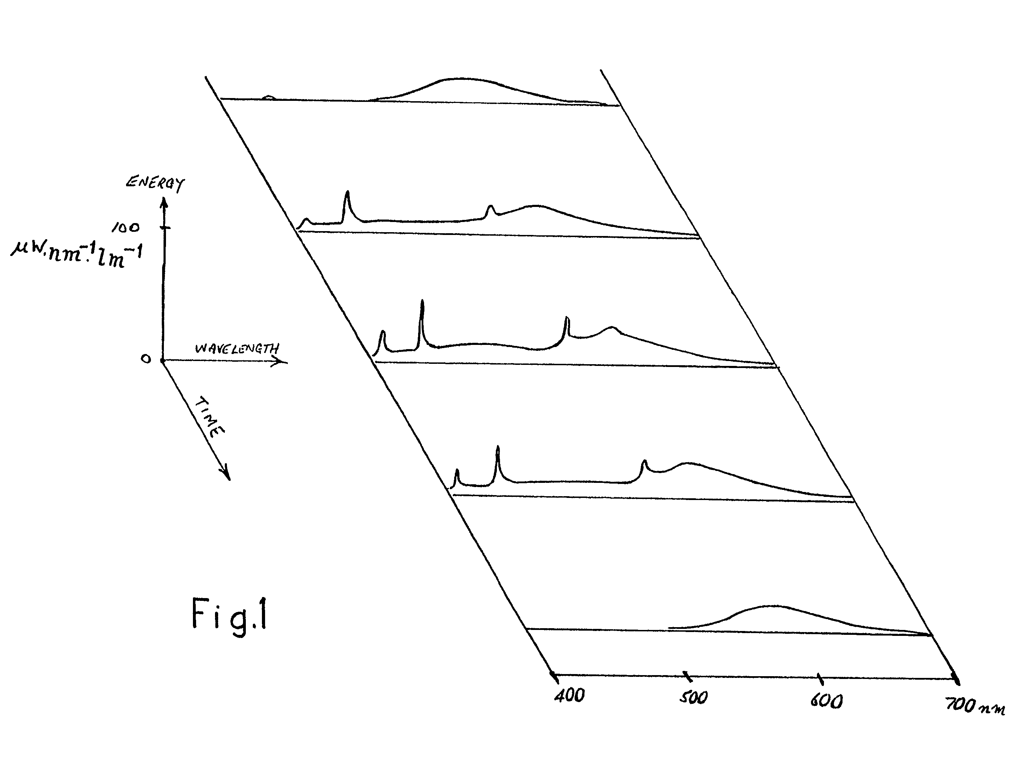

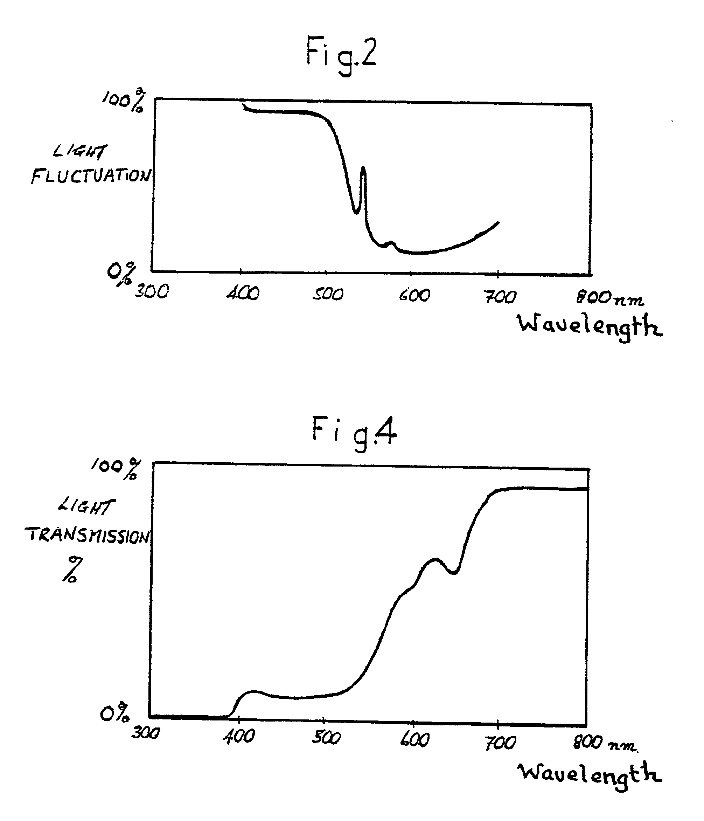

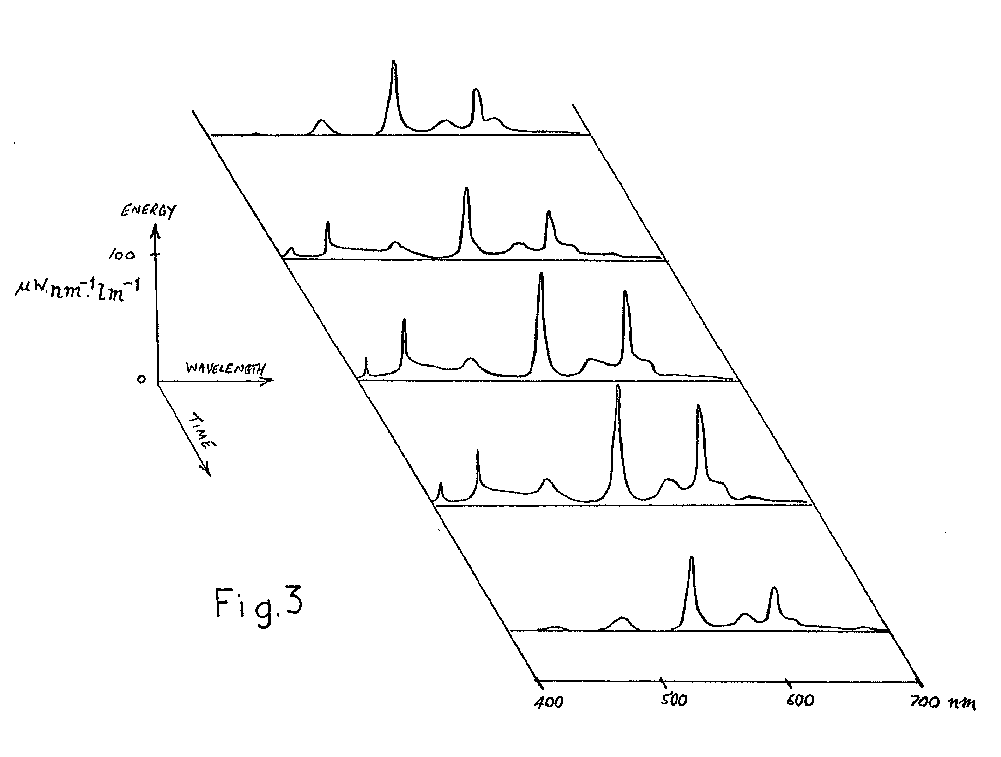

For halophosphate lamps (so-called "white", "warm white" and "cool white") the greatest variation with time occurs for wavelengths shorter than 550 nm. The spectral energy distribution of a cool white halophosphate lamp is shown as a function of time in Figure 1. The orange-red phosphor retains the light from one gas discharge to the next but at the blue end of the spectrum there is considerable variation with time. This is shown more clearly in Figure 2. An optical device, such as a tinted or coated lens, which removes most of the light from the short wavelength end of the spectrum can therefore reduce the pulsation from halophosphate lamps.

The spectral power distribution of a typical triphosphor lamp is shown as a function of time in Figure 3. Triphosphor lamps are more expensive but are used when an efficient light source with a good colour rendering index is required. The variation at the long wavelength end of the light spectrum is greater than for halophosphate lamps because of the use of a short-persistence red phosphor with a spectral peak in the range 610-650 nm. Any filter that reduces fluctuation from halophosphate lamps may therefore increase the fluctuation from triphosphor lamps. In order to reduce this increase as much as possible it is useful to absorb some of the light having wavelengths in the range 610-650 nm.

It is an object of the present invention to provide an optical device for preventing the flickering or pulsating light from electrical or electronic devices impinging on the eye with a view to relieving the stress on the visual system of a person subjected to light emitted from such electrical or electronic devices.

To this end, the invention consists in an optical device which functions to reduce the amount or intensity of non-steady light impinging on the eye and emitted by an electrical or electronic device.

The invention also consists in an optical device which is adapted to be disposed between an electrical or electronic device emitting both steady and non-steady light and the eye of a person subjected to such light, characterised in that the optical device functions to reduce the intensity of the non-steady light incident upon the eye.

The optical device according to the invention is expected to be capable of reducing the incidence of headaches in those persons who work in offices illuminated by fluorescent lighting and with VDUs. It may be produced in a number of forms. For example, it may take the form of a transparent screen fitted to the front of a VDU, a translucent shade for a fluorescent light, or, more conveniently, be produced as an ophthalmic device, such as, lenses for spectacles, goggles or visors.

Preferably, the optical device is produced so as to permit most of the steady light emanating from an electrical or electronic device to impinge on the eye whilst preventing most of the non-steady light from impinging thereon. The desired result may be achieved by constructing the optical device so that it absorbs and/or reflects light having wavelengths in the region of the wavelengths of the non-steady light.

In a preferred embodiment of the invention, the optical device reduces transmission to the eye of light in the shorter wavelengths of the light spectrum, preferably wavelengths below 550 nm. This enables the optical device to achieve the desired function when used with halophosphate lamps. To enable it additionally to achieve the desired function when used with triphosphor lamps, the optical device may also be constructed to reduce transmission to the eye of light having wavelengths in the range 610-650 nm.

In order to avoid interfering with colour perception, it is necessary for the optical device to transmit a small fraction of light with wavelengths less than 550 nm so that the short wave receptors receive some stimulation. Permitting a small amount of the short wavelength light to be transmitted to the eye is not as detrimental as it would at first appear. This is because the eye is not equally sensitive to different wavebands. Under daylight conditions the eye is most sensitive to light of about 550 nm and much less sensitive to light of less than 500 nm. Some transmission of light in the 400 to 500 nm region is therefore advantageous.

The use of anti-reflection coatings to prevent the distraction of reflected images is well known and obviously creates a further improvement to vision when wearing spectacles. The improvement in light transmission created by a top quality broadband anti-reflection coating is approximately 7% (from 92% for uncoated lenses to 99% for coated lenses). This permits an additional 7% of tint to be incorporated into the lens without a corresponding reduction in light transmission. In addition to this benefit (which increases the effectiveness of the light absorbing feature) it is also possible for the special coating preferentially to reflect the undesirable light (below 550 nm) whilst increasing the transmission of the light above 550 nm.

It has also been discovered that the distortion of colour perception can be further reduced by incorporating a gradual, rather than sudden, transition from the low to high light transmission levels.

According to a feature of the invention, therefore, the optical device has a transmission level of approximately 10% for light wavelengths in the regions of the wavelengths of the non-steady shorter than 550 nm, and a transmission level of approximately 90% for wavelengths in the remaining regions of the light spectrum, e.g. the longer wavelengths. There may be a gradual transition in transmission level from the lower level to the higher level. For wavelengths shorter than 400 nm, the light transmission level of the optical device may be substantially zero without resulting in any unacceptable affect or colour perception.

The optical device according to the invention may be produced in various ways, such as, with a light absorbing "tint", a reflective mechanism, e.g. a thin film coating, or by other optical methods, e.g. holograms or gratings.

Tinting procedures for both glass and plastic lenses are well known. With glass this can be done by incorporating chemicals into the glass when it is formed, although this method has been largely superseded by vacuum deposition of chemicals onto the surface. Plastic tinting is a dyeing process where the lenses are dipped in solutions of chemicals which are absorbed into the plastic material.

Anti-reflection coating of the optical materials is a well known procedure where very thin layers of optical materials with different refractive indices are applied to the surface. They function due to the wavelike nature of light so that by choosing specific thicknesses a partial (or full) cancellation of positive and negative waves can prevent the reflection of particular frequencies of light. This effect can also be used in reverse to produce increased reflections.

With the present invention, absorption and/or reflection may be utilised so as preferentially to transmit only the desired fraction of light. The light which is non-steady (flickering) is at specific wavelengths depending on the particular electrical or electronic source. In the case of fluorescent lights, this is mainly in the region of wavelengths below 550 nm. The colour of light for different wavelengths is well documented ; below 550 in blue and violet and above 550 in yellow and red. This means that, desirably, embodiments of the invention should mainly reflect or absorb blue light and transmit red and yellow light. Therefore, lenses with the required features may have a red/yellow/rose/pink appearance due to the absorption by the tint of these colours and/or a blue reflection.

One specific embodiment of the invention is a spectacle lens with the light transmission characteristic shown in Figure 4. This lens is tinted and has a cosmetic brown-red appearance similar to that of sunglasses. A 10% transmission level is maintained for light having wavelengths between 400 and 500 nm to improve colour perception. The transition to the higher transmission level at longer wavelengths is gradual. Within the limits of simple dyeing techniques, the increase to higher transmittance is curtailed in the range 610-650 nm in an attempt to reduce the effects of pulsation from triphosphor lamps. An ultra-violet (300 to 400 nm) absorber is also incorporated. The tint differs from other designed spectrum lenses, such as those currently marketed by Brain Power - International, which have a near zero transmission level over certain ranges of the visible spectrum.

The manufacturing process for the specific embodiment described above is as follows. A readily available ophthalmic hard resin spectacle lens is used, e.g. a spectacle lens made from allgl diglycol bis carbonate, and is first immersed in an ultra-violet absorbing dye, until the light transmission below 400 nm is zero. The lens is then immersed in a pink dye, until an average light transmission of 30% is obtained when measured with an integrating light transmission meter. It is then immersed in a bleach, until an average light transmission of 39% is obtained. Thereafter, it is immersed in yellow dye until the blue region transmission has levelled out at 10%.

Whilst particular embodiments have been described, it will be understood that modifications can be made without departing from the scope of the invention as defined by the appended claims.

## Claims

1. An optical device which functions to reduce the intensity of non-steady light impinging on the eye and emitted by an electrical or electronic device.

2. An optical device which is adapted to be disposed between an electrical or electronic device emitting both steady and non-steady light and the eye of a person subjected to such light, characterised in that the optical device functions to reduce the intensity of said non-steady light incident upon the eye.

3. An optical device according to claim 2, characterised in that it permits most of the steady light to be incident upon the eye whilst preventing most of the non-steady light from being incident thereupon.

4. An optical device according to claim 1, 2 or 3, characterised in that it absorbs and/or reflects light having wavelengths in the region of the wavelengths of the non-steady light.

5. An optical device according to claim 4, characterised in that it reduces transmission to the eye of light in the shorter wavelengths of the light spectrum, preferably, wavelengths below approximately 550 nm.

6. An optical device according to claim 5, characterised by a transmission level of approximately 10% for light of said shorter wavelengths, a transmission level of approximately 90% for the remaining longer wavelengths of the light spectrum, and a gradual transition in transmission level from said lower level to said higher level.

7. An optical device according to claim 5 or 6, characterised by a substantially zero transmission level for light having wavelengths shorter than 400 nm.

8. An optical device according to claim 5, 6 or 7, characterised in that it reduces transmission to the eye of light having wavelengths in the range 610-650 nm

9. An optical device according to claim 5, 6, 7 or 8, characterised by a low transmission level for light wavelengths shorter than 500 nm, a high transmission level for light wavelengths longer than 700 nm, a gradual transition in the transmission level between 500 nm and 700 nm from said low level to said high level, and a transmission level reduced below said high level in the range 610-650 nm.

10. An optical device according to any preceding claim, characterised in that it comprises ophthalmic hard resin, such as, allgl diglycol bis carbonate and is coloured with dye having light absorbing properties.

11. A method of manufacturing an optical device according to any preceding claim, characterised by forming a member from ophthalmic synthetic resin material, immersing the member in an ultra-violet absorbing dye until the light transmission level of the member for light wavelengths below 400 nm is zero, immersing the member in a pink dye until the average transmission level for other light wavelengths is 30%, immersing the member in bleach until the average light transmission level is increased to 39%, and immersing the member in a yellow dye until the transmission level for the blue region of light wavelengths is 10%.

Fig.1

Fig.2

Fig.4

Fig. 3